(19) Europäisches Patentamt
European Patent Office
Office européen des brevets

(11) EP 2 302 095 B1

# (12) EUROPEAN PATENT SPECIFICATION

(45) Date of publication and mention of the grant of the patent:
**04.04.2018 Bulletin 2018/14**

(21) Application number: **09766587.1**

(22) Date of filing: **11.06.2009**

(51) Int Cl.:
***C23C 22/00*** (2006.01)
***C04B 28/34*** (2006.01)
***C21D 8/12*** (2006.01)
***C23C 22/74*** (2006.01)
***H01F 1/18*** (2006.01)
***H01F 41/00*** (2006.01)
***H01F 41/02*** (2006.01)

(86) International application number:
**PCT/JP2009/060713**

(87) International publication number:
**WO 2009/154139 (23.12.2009 Gazette 2009/52)**

## (54) NON-ORIENTED ELECTRICAL STEEL SHEET AND MANUFACTURING METHOD THEREOF

NICHT-ORIENTIERTES ELEKTROSTAHLBLECH UND HERSTELLUNGSVERFAHREN DAFÜR

TÔLE D'ACIER ÉLECTRIQUE NON-ORIENTÉ ET PROCÉDÉ DE FABRICATION DE CELUI-CI

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **20.06.2008 JP 2008162560**

(43) Date of publication of application:
**30.03.2011 Bulletin 2011/13**

(73) Proprietor: **Nippon Steel & Sumitomo Metal Corporation**
**Tokyo 100-8071 (JP)**

(72) Inventors:
- **FUJII, Hiroyasu**
  **Tokyo 100-8071 (JP)**
- **SASAKI, Tetsuya**
  **Tokyo 100-8071 (JP)**
- **MATSUMOTO, Yutaka**
  **Tokyo 100-8071 (JP)**
- **TAKEDA, Kazutoshi**
  **Tokyo 100-8071 (JP)**
- **MURAKAWA, Tesshu**
  **Tokyo 100-8071 (JP)**

(74) Representative: **Vossius & Partner**
**Patentanwälte Rechtsanwälte mbB**
**Siebertstrasse 3**
**81675 München (DE)**

(56) References cited:
**JP-A- 2000 129 455**
**JP-A- 2002 317 277**
**JP-A- 2002 317 277**
**JP-A- 2005 120 424**
**JP-A- 2005 240 125**
**JP-A- 2005 272 975**
**JP-A- 2005 272 975**
**US-A- 4 496 399**
**US-B1- 6 509 099**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 302 095 B1

## Description

TECHNICAL FIELD

The present invention relates to a non-oriented electrical steel sheet having a small environmental load and a manufacturing method thereof.

BACKGROUND ART

A non-oriented electrical steel sheet is used as an iron core material for motor, for example. In this case, a plurality of non-oriented electrical steel sheets are stacked on one another, so that they have to be insulated one from another. For this reason, insulating films are formed on surfaces of the non-oriented electrical steel sheets. As a material of the insulating film, a compound containing chromate has been used.

However, chromium is likely to cause environmental pollution. Therefore, in recent years, there has been conducted a research regarding a forming method of a film using a compound which does not contain chromate. Such a film is sometimes referred to as an environment-responsive coating.

A technique regarding the environment-respective coating can be classified broadly into two types, based on a difference of inorganic component to be used. One is a technique in which colloidal silica is used as a main inorganic component, and the other is a technique in which phosphate is used as a main inorganic component.

However, in conventional non-oriented electrical steel sheets having films containing phosphate, if the non-oriented electrical steel sheets are stacked on one another over a long period at room temperature or temperature a little higher than the room temperature, the films may become sticky, or the films may adhere to one another.

For example, the non-oriented electrical steel sheets having the films formed thereon are sometimes transported by ships. In this case, the non-oriented electrical steel sheets are disposed, in a hold, in a state of "being rolled in a coil shape" and axial centers of coils become horizontal, namely, in a state where "the rolled sheets are aligned side by side". At this time, a large surface pressure applies to the mutually contacted films, and this state is maintained over a long period.

Further, when an adhesion occurs under this state, it becomes difficult to release the rolled state of the non-oriented electrical steel sheets at a customer.

Although there are various techniques regarding the environmental-responsive coating (Patent Documents 1 to 29), it is not possible to effectively suppress the adhesion in any of them.

CITATION LIST

PATENT LITERATURE

Patent Document 1: Japanese Laid-open Patent Publication No. 59-21927

Patent Document 2: Japanese Laid-open Patent Publication No. H9-122582

Patent Document 3: Japanese Laid-open Patent Publication No. H9-136061

Patent Document 4: Japanese Laid-open Patent Publication No. H9-314733

Patent Document 5: Japanese Laid-open Patent Publication No. H9-323066

Patent Document 6: Japanese Laid-open Patent Publication No. H9-327886

Patent Document 7: Japanese Laid-open Patent Publication No. H10-36976

Patent Document 8: Japanese Laid-open Patent Publication No. H10-34812

Patent Document 9: Japanese Laid-open Patent Publication No. H10-128903

Patent Document 10: Japanese Laid-open Patent Publication No. H10-128904

Patent Document 11: Japanese Laid-open Patent Publication No. H10-130858

Patent Document 12: Japanese Laid-open Patent Publication No. H10-130859

Patent Document 13: Japanese Laid-open Patent Publication No. 2001-240916

Patent Document 14: Japanese Laid-open Patent Publication No. 2004-197202

Patent Document 15: Japanese Laid-open Patent Publication No. H6-330338

Patent Document 16: Japanese Laid-open Patent Publication No. H7-41913

Patent Document 17: Japanese Laid-open Patent Publication No. H7-166365

Patent Document 18: Japanese Laid-open Patent Publication No. H11-80971

Patent Document 19: Japanese Laid-open Patent Publication No. H11-131250

Patent Document 20: Japanese Laid-open Patent Publication No. H11-152579

Patent Document 21: Japanese Laid-open Patent Publication No. 2000-129455

Patent Document 22: Japanese Laid-open Patent Publication No. H10-15484

Patent Document 23: Japanese Laid-open Patent Publication No. H10-15485

Patent Document 24: Japanese Laid-open Patent Publication No. H10-46350

Patent Document 25: Japanese Laid-open Patent Publication No. H10-130857

Patent Document 26: Japanese Laid-open Patent Publication No. H9-316655

Patent Document 27: Japanese Laid-open Patent Publication No. 2004-322079

Patent Document 28: Japanese Laid-open Patent Publication No. 2000-26979

Patent Document 29: Japanese Laid-open Patent Publication No. 2004-107796

## SUMMARY OF THE INVENTION

## TECHNICAL PROBLEM

An object of the present invention is to provide a non-oriented electrical steel sheet capable of effectively suppressing adhesion even if a film thereof contains phosphate, and a manufacturing method thereof.

## SOLUTION TO PROBLEM

The present inventors analyzed an adhesion as will be described later and started to set out a solution. As a result of this, the present inventors found out that the occurrence of adhesion is effectively suppressed by making a application liquid for forming film contain a specified inorganic powder so that the ceramics powder absorbs or immobilizes free phosphoric acid generated in accordance with a dehydration/condensation reaction. Further, the present inventors also found out that it is preferable to previously reduce phosphate groups in the application liquid within a range in which a desired property can be obtained, in order to reduce the amount of free phosphoric acid.

The present invention has been made based on these findings, and the gist thereof is as follows.

(1) A manufacturing method of a non-oriented electrical steel sheet, including:

coating an application liquid which contains an inorganic component and an organic resin on a surface of a steel sheet; and

forming an inorganic-organic composite film by baking the application liquid on the surface of the steel sheet, wherein the application liquid contains phosphate as the inorganic component, and

wherein the application liquid further contains an inorganic powder having a BET specific surface area of 10 $m^2/g$ or more and exhibiting a particle size distribution with a 50% cumulative particle size of 5 μm or less and with a 90% cumulative particle size of 15 μm or less when measured by a laser diffraction particle size analyzer, the powder being contained at a ratio of no less than 1 mass%, nor more than 50 mass% with respect to a solid content of the phosphate.

(2) The manufacturing method of a non-oriented electrical steel sheet according to (1), wherein the application liquid does not contain a chromate-based compound.

(3) The manufacturing method of a non-oriented electrical steel sheet according to (1) or (2), wherein the application liquid contains, as the inorganic powder, at least one kind selected from a group consisting of alumina powder, silica powder, magnesia powder, titania powder and zirconia powder.

(4) The manufacturing method of a non-oriented electrical steel sheet according to any one of (1) to (3), wherein the application liquid is formed of a mixed solution of an aqueous aluminum biphosphate solution and an aqueous dispersion of organic resin, and the inorganic powder.

(5) The manufacturing method of a non-oriented electrical steel sheet according to any one of (1) to (4), wherein a temperature at the baking the application liquid on the surface of the steel sheet is set to 270°C or higher.

(6) A non-oriented electrical steel sheet, including an inorganic-organic composite film formed on a surface, wherein the inorganic-organic composite film contains:

phosphate; and

an inorganic powder having a BET specific surface area of 10 $m^2/g$ or more and exhibiting a particle size distribution with a 50% cumulative particle size of 5 μm or less and with a 90% cumulative particle size of 15 μm or less when measured by a laser diffraction particle size analyzer, and

wherein a content of the inorganic powder is no less than 1 mass%, nor more than 50 mass% with respect to a solid content of the phosphate.

(7) The non-oriented electrical steel sheet according to (6), wherein the inorganic-organic composite film does not contain a chromate-based compound.

(8) The non-oriented electrical steel sheet according to (6) or (7), wherein the inorganic-organic composite film contains, as the inorganic powder, at least one kind selected from a group consisting of alumina powder, silica powder, magnesia powder, titania powder and zirconia powder.

(9) An application liquid for a non-oriented electrical steel sheet, containing:

phosphate as an inorganic component; and

an inorganic powder having a BET specific surface area of 10 $m^2/g$ or more and exhibiting a particle size distribution with a 50% cumulative particle size of 5 μm or less and with a 90% cumulative particle size of 15 μm or less when measured by a laser diffraction particle size analyzer, the powder being contained at a ratio of no less than 1 mass%, nor more than 50 mass% with respect to a solid content of the phosphate.

(10) The application liquid for a non-oriented electrical steel sheet according to (9), wherein a chromate-based compound is not contained.

(11) The application liquid for a non-oriented electrical steel sheet according to (9) or (10), wherein at least one kind selected from a group consisting of alumina powder, silica powder, magnesia powder, titania powder and zirconia powder is contained as the inorganic powder.

## ADVANTAGEOUS EFFECTS OF INVENTION

According to the present invention, since a application liquid contains a specified inorganic powder, even if a film contains phosphate, it is possible to effectively suppress adhesion.

## DESCRIPTION OF EMBODIMENTS

First, details of how the present inventors completed the present invention will be described.

The present inventors focused attention on a chemical change at the time when phosphate is baked on a surface of a steel sheet (steel base material), and analyzed the chemical reaction. Note that the chemical reaction of phosphate is so complicated that it has not been clarified yet on a scientific study.

When an aqueous phosphate solution containing Al is heated, a dehydration/condensation reaction occurs. In the dehydration/condensation reaction, phosphorus components and Al components are solidified while mutually forming networks. As a result of that, an inorganic film coating on the surface of the steel sheet is formed. Here, the dehydration/condensation reaction will be described by citing aluminum biphosphate as an example.

When aluminum biphosphate is heated, a reaction as in the equation (1) proceeds.

$$Al(H_2PO_4)_3 \rightarrow AlPO_4 + H_xPO_y \qquad \text{equation (1)}$$

From the equation (1), it can be seen that when forming a film using the dehydration/condensation reaction of aluminum biphosphate, a phosphoric acid component which is not bonded to a metal component, that is, aluminum, namely, free phosphoric acid is by-produced in accordance with the proceeding of the dehydration/condensation reaction.

The present inventors thought that an adhesion phenomenon occurred in stacked non-oriented electrical steel sheets is caused by the free phosphoric acid, and earnestly investigated a reaction mechanism of the adhesion phenomenon.

When non-oriented electrical steel sheets are stacked, a certain amount of gap exists between the respective steel sheets. Therefore, it is quite possible that moisture enters the gap from an ambient atmosphere.

Meanwhile, when free phosphoric acid exists in a film, since the free phosphoric acid is not bonded to a metal component, it is chemically unstable and is highly likely to react with another component. Therefore, it is quite possible that the free phosphoric acid in the film reacts with the moisture that entered the gap. Further, when the free phosphoric acid reacts with the moisture, a kind of swelling reaction occurs in the film, which results in causing stickiness.

When the stickiness is caused in a state where a pressure acts on surfaces of non-oriented electrical steel sheets such as a state where the non-oriented electrical steel sheets are rolled in a coil shape, films are adhered to each other, which results in creating a state where the non-oriented electrical steel sheets are adhered to each other.

The present inventors thought that if it is possible to inhibit sticking reaction with the moisture by inactivating or immobilizing the free phosphoric acid, an adhesion phenomenon occurred in an inorganic-organic composite film containing no chromate-based compound can be suppressed.

Through further and repeated earnest investigation, the present inventors thought to previously make an application liquid used for forming the inorganic-organic composite film without chromate-based compound contain an inorganic powder such as ceramics so that free phosphoric acid generated in a dehydration/condensation reaction is absorbed and immobilized by the inorganic powder. Specifically, the present inventors thought that even if free phosphoric acid is generated from phosphate through the dehydration/condensation reaction, the occurrence of stickiness and adhesion phenomenon may be prevented by making the free phosphoric acid to be absorbed on a surface of the inorganic powder to immobilize the free phosphoric acid.

Note that not only free phosphoric acid generated from phosphate after manufacturing non-oriented electrical steel sheets on which films are formed, but also free phosphoric acid in an application liquid used for forming the films may cause the stickiness and adhesion phenomenon. Conventionally, a phosphoric acid-rich solution formed by further adding phosphoric acid to an aqueous phosphate solution has been sometimes used to prevent precipitation of a phosphate crystal during the storage of the aqueous phosphate solution, but, in the present invention, it is preferable not to use such phosphoric acid-rich aqueous phosphate solution.

Further, the present inventors conducted various experiments as described as follows based on these views.

(BET specific surface area)

The present inventors thought that efficiency for capturing free phosphoric acid generated in a film using an inorganic powder is largely affected by a surface area of the inorganic powder. Therefore, alumina powders with various surface areas were prepared and used for the experiments.

Among inorganic powders, an alumina powder is relatively inexpensive. Further, products with variety of surface areas ranging from small to large are on the market, and it is easy to obtain alumina powders with various surface areas. Accordingly, the present inventors selected the alumina powder among various inorganic powders as a first evaluation target.

The surface area of the alumina powder was evaluated using a BET (Brunauer, Emmett, Teller) method. A measurement method of a specific surface area using the BET method is commonly used as an evaluation method of a surface area of an inorganic powder. The BET method is a method of measuring, by making a powder absorb, for example, nitrogen gas of which absorption occupied area is known on a surface thereof, a surface area of the powder based on an absorption amount and a pressure change. Since the surface area is normally represented by a surface

area ($m^2$) per unit weight (g) of a powder, it is called a specific surface area that has a unit of "$m^2/g$".

Further, the present inventors conducted experiments described as follows, in order to understand a suppress effect of the BET specific surface area of the alumina powder on the adhesion phenomenon.

First, steel sheets were cold-rolled to a thickness of 0.5 mm and then annealed at 900°C, thereby producing a plurality of steel sheets on which films were not formed.

Further, there were prepared application liquids each formed by adding 5 g of alumina powder to a mixed solution of 100 g of an aqueous aluminum biphosphate solution having a concentration of 50 mass% and 40 g of an aqueous dispersion of acrylic organic resin having a concentration of 30 mass%. At this time, nine types of alumina powders each having a different BET specific surface area were used. Further, as the alumina powders, ones having a 50% cumulative particle size of 0.15 μm and a 90% cumulative particle size of 0.73 μm regarding a particle size distribution measured by using a laser diffraction particle size analyzer were used, regardless of the BET specific surface area.

Further, the application liquids were coated on surfaces of the steel sheets and dried under a condition where an achieving temperature of the steel sheets became 300°C. A coating amount of the application liquid was set so that an amount of film after the drying (after the baking) became 2.5 $g/m^2$ per one side of the steel sheet.

A measurement method of particle size distribution using a laser diffraction particle size analyzer is commonly used as an evaluation method of particle size distribution of an inorganic powder. In this measurement method, a powder to be a measurement target is dispersed in a solvent such as water, and the solvent in which the powder is dispersed is placed in the laser diffraction particle size analyzer. The laser beam with specific wavelength was irradiated to the dispersion, analyzed scattered light and diffracted light from the dispersion, converted the analysis result into a particle size distribution and output it. Hereinafter, the term particle size distribution indicates a particle size distribution (including 50% cumulative particle size and 90% cumulative particle size) measured by the laser diffraction particle size analyzer, unless otherwise stated.

Adhesion of thus produced non-oriented electrical steel sheets with films was evaluated in a procedure described as follows.

First, a large number of samples each having a size of 30 mm × 40 mm were cut out from a non-oriented electrical steel sheet. Subsequently, these samples were stacked so that a long side and a short side were alternately disposed, pressurized at a surface pressure of 40 $kg/cm^2$, and fixed under a pressurized state. Specifically, surfaces of the non-oriented electrical steel sheets were contacted to one another in an area of 30 mm × 30 mm, namely, in an area of 9 $cm^2$. The number of stacked non-oriented electrical steel sheets was set to ten under one condition.

Thereafter, ten pieces of non-oriented electrical steel sheets were put, while being fixed, into a thermo-hygrostat in which the temperature was kept at 50°C and the humidity was kept at 90%. This state simulated a situation where the non-oriented electrical steel sheets rolled in a coil shape are being transported.

The non-oriented electrical steel sheets were taken out, at a time point at which one week has passed after the steel sheets were put into the thermo-hygrostat, and were cooled to room temperature. Thereafter, the pressurized state was released, and the non-oriented electrical steel sheets were peeled off one by one. Namely, the nine times of peeling were conducted for each stack of the ten pieces of non-oriented electrical steel sheets. At this time, a force required for the peeling was measured by using a spring scale, and an average value (peel force) of the nine times of peeling was calculated. Results thereof are shown in Table 1. Smaller peel force value indicates that the stickiness and adhesion phenomenon were unlikely to occur, and larger peel force value indicates that the stickiness and adhesion phenomenon were likely to occur. Accordingly, in Table 1, an evaluation in which the peel force was less than 50 g was represented by ◎, an evaluation in which the peel force was not less than 50 g and less than 100 g was represented by ○, and an evaluation in which the peel force was 100 g or more was represented by ×.

[Table 1]

| NUMBER | BET SPECIFIC SURFACE AREA OF ALUMINA POWDER | PEEL FORCE | |
|---|---|---|---|
| | ($m^2/g$) | (g) | DETERMINATION |
| A (1) | 0.5 | 825 | × |
| A (2) | 3.7 | 445 | × |
| A (3) | 10.0 | 72 | ○ |
| A (4) | 28.1 | 63 | ○ |
| A (5) | 40.0 | 41 | ◎ |
| A (6) | 101.6 | 35 | ◎ |
| A (7) | 250.3 | 25 | ◎ |
| A (8) | 340.4 | 27 | ◎ |
| A (9) | 450.0 | 21 | ◎ |

As shown in Table 1, under conditions of numbers A(1) and A(2) each using the alumina powder whose BET specific surface area was less than 10 $m^2/g$, the peel forces were very large to be 825 g and 445 g, respectively. This indicates that the films were adhered to one another in the thermo-hygrostat.

Meanwhile, under conditions of numbers A(3) to A(9) each using the alumina powder whose BET specific surface area was 10 $m^2/g$ or more, the peel forces were small to be 72 g to 21 g. This indicates that the stickiness and adhesion phenomenon were effectively prevented. In particular, under the conditions of the numbers A(5) to A(9) each using the alumina powder whose BET specific surface area was 40 $m^2/g$ or more, the peel forces were quite small to be less than 50 g. This indicates that the effect of preventing the stickiness and adhesion phenomenon under these conditions is particularly excellent.

From the above results, it was confirmed that the BET specific surface area of the alumina powder is only required to be 10.0 $m^2/g$ or more in order to suppress the stickiness and adhesion phenomenon. Further, it was also confirmed that the effect of suppressing the stickiness and adhesion phenomenon is particularly excellent when the BET specific surface area of the alumina powder is 40 $m^2/g$ or more.

(Particle size distribution)

Next, the present inventors examined the affect of particle size distribution of an inorganic powder to be added, by conducting experiments described below.

Here, description on how the particle size distribution affects the property of the non-oriented electrical steel sheet will be made.

The non-oriented electrical steel sheet according to the present invention is used, for example, as an iron core material for electric equipment, particularly, as an iron core material for rotating machine (motor). In this case, a plurality of non-oriented electrical steel sheets are sometimes stacked on one another.

One of reasons why the non-oriented electrical steel sheet is used as the iron core material for rotating machine is a high magnetic flux density thereof. The iron core material for rotating machine is required to efficiently introduce a magnetic flux within the iron core when electric energy is converted into mechanical energy in accordance with the law of electrical induction. Specifically, the iron core material for rotating machine is required to have a high magnetic flux density. The non-oriented electrical steel sheet satisfies the requirement.

Therefore, a stack formed by stacking a plurality of non-oriented electrical steel sheets is also required to have a high magnetic flux density. A gap exists, to no small extent, between the non-oriented electrical steel sheets, and the magnetic flux density is lowered as the gap is larger. This is because the magnetic flux density in the air existing in the gap is significantly low. Therefore, in a film of a non-oriented electrical steel sheet, it is required that a convex portion is small and the number thereof is small in order not to generate the gap as described above.

Specifically, it is unfavorable for the non-oriented electrical steel sheets, which are stacked to be used to have coarse convex portions on surfaces of films thereof.

However, when the inorganic powders such as alumina powders are added to the application liquid as described above, it is conceivable that a part of the inorganic powders is positioned on the surface of the film. Further, for example, even when a large part of the inorganic powders contained in the application liquid are small, if coarse powders are contained, convex portions ascribable to such coarse powders may be scattered on the surface of the film. In this case, a size of the gap between the non-oriented electrical steel sheets is varied by the convex portions.

For this reason, it is important to set a particle size distribution including a particle size, in particular, even a portion of a large particle size of the inorganic powder, to fall within an appropriate range.

Accordingly, the present inventors defined the particle size distribution based on a 50% cumulative particle size and a 90% cumulative particle size measured by a laser diffraction particle size analyzer.

Here, the 50% cumulative particle size corresponds to a particle size, in a particle size distribution formed from a population of inorganic powder, when a volume is integrated in the order of smaller particle sizes and the integrated value reaches 50% of a total volume of the population. Further, the 90% cumulative particle size corresponds to a particle size when the integrated value of the volume reaches 90% of the total volume of the population.

Accordingly, it is conceivable that the 50% cumulative particle size indicates a value close to an average particle size of the population, and the 90% cumulative particle size indicates a value close to an approximate particle size of a coarse particle fraction in the population.

Further, the present inventors conducted experiments regarding a relation between the particle size distribution of alumina powder and a surface roughness Ra (centerline average roughness) of a film.

First, steel sheets were cold-rolled to a thickness of 0.15 mm and then annealed at 1050°C, thereby producing a plurality of steel sheets on which films were not formed.

Further, there were prepared application liquids each formed by adding 3 g of alumina powder having a BET specific surface area of 120 $m^2/g$ to a mixed solution of 100 g of an aqueous aluminum biphosphate solution having a concentration of 50 mass% and 40 g of an aqueous dispersion of acrylic organic resin having a concentration of 30 mass%. At this time, nine types of alumina powders each having different 50% cumulative particle size and 90% cumulative particle size were used.

Further, the application liquids were coated on surfaces of the steel sheets and dried under a condition where an achieving temperature of the steel sheets became 320°C. A coating amount of the application liquid was set so that an amount of film after the drying (after the baking) became 3.5 g/$m^2$ per one side of the steel sheet.

Thereafter, the surface roughness Ra of each of the non-oriented electrical steel sheets was measured, and further, the peel force was measured in the same manner as that of the above-described experiments. Results thereof are shown in Table 2. Also in Table 2, an evaluation in which the peel force was less than 50 g was represented by ◎, an evaluation in which the peel force was not less than 50 g and less than 100 g was represented by ○, and an evaluation in which the peel force was 100 g or more was represented by ×. Further, regarding the surface roughness Ra, ◎ represented an average roughness of 0.35 μm or less, ○ represented the average roughness which was more than 0.35 μm and was 0.8 μm or less, and × represented the average roughness which was more than 0.8 μm.

[Table 2]

| NUMBER | PARTICLE SIZE DISTRIBUTION OF ALUMINA POWDER ($\mu$m) | | PEEL FORCE | | SURFACE ROUGHNESS Ra | | COMPREHENSIVE DETERMINATION |
|---|---|---|---|---|---|---|---|
| | 50% CUMULATIVE PARTICLE SIZE | 90% CUMULATIVE PARTICLE SIZE | (g) | DETERMINATION | ($\mu$m) | DETERMINATION | |
| B (1) | 0.25 | 0.62 | 42 | ◎ | 0.21 | ◎ | ○ |
| B (2) | 0.32 | 1.13 | 37 | ◎ | 0.23 | ◎ | ○ |
| B (3) | 0.49 | 1.55 | 45 | ◎ | 0.29 | ◎ | ○ |
| B (4) | 1.64 | 5. 0 | 28 | ◎ | 0.35 | ◎ | ○ |
| B (5) | 2.25 | 8.6 | 35 | ◎ | 0.39 | ○ | ○ |
| B (6) | 3.82 | 10.5 | 25 | ◎ | 0.43 | ○ | ○ |
| B (7) | 5.00 | 15.0 | 28 | ◎ | 0.63 | ○ | ○ |
| B (8) | 9.47 | 25.2 | 34 | ◎ | 0.87 | × | × |
| B (9) | 13.8 | 43.5 | 21 | ◎ | 1.52 | × | × |

As shown in Table 2, the peel force was small to be less than 50 g under any of conditions of numbers B(1) to B(9). This is because the alumina powder having the BET specific surface area of 120 $m^2/g$ was used.

Further, under the conditions of the number B(1) to the number B(7), in which the 50% cumulative particle size was 5 μm or less and the 90% cumulative particle size was 15 μm or less, the surface roughnesses Ra were small to be 0.21 μm to 0.63 μm. Specifically, no coarse convex portions were formed on the surfaces of the films, and thus a favorable state was provided.

On the other hand, under the conditions of the number B(8) and the number B(9), in which the 50% cumulative particle size was more than 5.0 μm and the 90% cumulative particle size was more than 15.0 μm, the surface roughnesses Ra were large to be 0.87 μm and 1.52 μm, respectively. Specifically, coarse convex portions were formed on the surfaces of the films.

Accordingly, regarding the particle size distribution of the inorganic powder such as alumina powder used in the present invention, the 50% cumulative particle size is set to 5.0 μm or less, and the 90% cumulative particle size is set to 15.0 μm or less. Further, the 90% cumulative particle size is preferably 5.0 μm or less, and more preferably 2.0 μm or less.

Note that from the perspective that the free phosphoric acid is absorbed to be immobilized by the inorganic powder such as alumina powder, there is no lower limit to the 90% cumulative particle size of the inorganic powder. However, since a significantly fine inorganic powder such as alumina powder is expensive, when cost is considered very important, the 90% cumulative particle size is preferably set to 0.5 μm or more.

(Amount of addition of inorganic powder)

The present inventors examined an effect of the amount of addition of powder.

First, steel sheets were cold-rolled to a thickness of 0.5 mm and then annealed at 900°C, thereby producing a plurality of steel sheets on which films were not formed.

Further, there were prepared application liquids each formed by adding an alumina powder to a mixed solution of 100 g of an aqueous aluminum biphosphate solution having a concentration of 50 mass% and 40 g of an aqueous dispersion of acrylic organic resin having a concentration of 30 mass%. At this time, the amount of addition of the alumina powder was varied in nine ways. Further, as the alumina powder, one having a 50% cumulative particle size of 0.43 μm, a 90% cumulative particle size of 2.32 μm, and a BET specific surface area of 100 $m^2/g$ was used.

Further, the application liquids were coated on surfaces of the steel sheets and dried under a condition where an achieving temperature of the steel sheets became 310°C. A coating amount of the application liquid was set so that an amount of film after the drying (after the baking) became 3.0 $g/m^2$ per one side of the steel sheet.

Thereafter, an appearance of each of the non-oriented electrical steel sheets was evaluated, and further, a peel force was measured in the same manner as that of the above-described experiments. Results thereof are shown in Table 3. Also in Table 3, an evaluation in which the peel force was less than 50 g was represented by ◎, an evaluation in which the peel force was not less than 50 g and less than 100 g was represented by ○, and an evaluation in which the peel force was 100 g or more was represented by ×. Further, regarding the appearance, one that looked uniform was represented by ○, and one that looked non-uniformly white was represented by ×. Note that "ratio with respect to aluminum phosphate" in Table 3 indicates a ratio of a mass (g) of alumina powder with respect to a solid content (g) of aluminum biphosphate contained in an aqueous aluminum biphosphate solution having a concentration of 50 mass%. The concentration of the aqueous aluminum biphosphate solution is 50 mass% and the mass thereof is 100 g, so that the solid content of aluminum biphosphate is 50 g.

[Table 3]

| NUMBER | ALUMINA POWDER | | PEEL FORCE | | APPEARANCE OF FILM | | COMPREHENSIVE DETERMINATION | REMARKS |
|---|---|---|---|---|---|---|---|---|
| | AMOUNT OF ADDITION (g) | RATIO WITH RESPECT TO ALUMINUM PHOSPHATE (MASS%) | (g) | DETERMINATION | APPEARANCE | DETERMINATION | | |
| C (1) | 0.10 | 0.2 | 982 | × | UNIFORM AND FAVORABLE | ○ | × | COMPARATIVE EXAMPLE |
| C (2) | 0.25 | 0.5 | 504 | × | UNIFORM AND FAVORABLE | ○ | × | COMPARATIVE EXAMPLE |
| C (3) | 0.5 | 1.0 | 92 | ○ | UNIFORM AND FAVORABLE | ○ | ○ | EXAMPLE |
| C (4) | 1.0 | 2.0 | 83 | ○ | UNIFORM AND FAVORABLE | ○ | ○ | EXAMPLE |
| C (5) | 2.5 | 5.0 | 43 | ◎ | UNIFORM AND FAVORABLE | ○ | ○ | EXAMPLE |
| C (6) | 5.0 | 10.0 | 31 | ◎ | UNIFORM AND FAVORABLE | ○ | ○ | EXAMPLE |
| C (7) | 10.0 | 20.0 | 20 | ◎ | UNIFORM AND FAVORABLE | ○ | ○ | EXAMPLE |
| C (8) | 25.0 | 50.0 | 14 | ◎ | UNIFORM AND FAVORABLE | ○ | ○ | EXAMPLE |
| C (9) | 37.5 | 75.0 | 12 | ◎ | NON-UNIFORMLY WHITE | × | × | COMPARATIVE EXAMPLE |

As shown in Table 3, under conditions of numbers C(1) and C(2), in which the ratio of Al with respect to phosphate was less than 1.0 mass%, the peel forces were very large to be 982 g and 504 g, respectively. This indicates that the films were adhered to one another in the thermo-hygrostat.

On the other hand, under conditions of numbers C(3) to C(9), in which the ratio with respect to aluminum phosphate was 1.0 mass% or more, the peel forces were small to be 92 g to 12 g. This indicates that the stickiness and adhesion phenomenon were effectively prevented. In particular, under the conditions of the numbers C(5) to C(9), in which the ratio with respect to aluminum phosphate was 5.0 mass% or more, the peel forces were quite small to be 50 g or less. This indicates that the effect of preventing the stickiness and adhesion phenomenon under these conditions is particularly excellent.

Further, under the conditions of the numbers C(1) to C(8), in which the ratio with respect to aluminum phosphate was 50.0 mass% or less, a uniform and favorable appearance was observed.

On the other hand, in the number C(9), in which the ratio with respect to aluminum phosphate was more than 50.0 mass%, a non-uniformly white appearance was observed.

From the above results, the conditions under which both the peel force and the appearance were favorable were the ones of the number C(3) to the number C(8). Specifically, it was confirmed that favorable peel force and appearance can be obtained when the ratio with respect to aluminum phosphate is 1.0 mass% to 50.0 mass%. Note that the ratio with respect to aluminum phosphate before and after the baking is the same. Namely, the ratio with respect to aluminum phosphate in the formed film is the same as that in the application liquid.

(Inorganic powder)

A material of the inorganic powder is not limited to alumina. For example, it is conceivable that silica, magnesia, titania and zirconia also exhibit the same behavior as that of alumina. In order to confirm this, the present inventors conducted experiments described below with respect to these inorganics.

First, steel sheets were cold-rolled to a thickness of 0.35 mm and then annealed at 920°C, thereby producing a plurality of steel sheets on which films were not formed.

Further, there were prepared application liquids formed by adding various ceramics powders having different BET specific surface areas and particle size distributions (50% cumulative particle sizes and 90% cumulative particle sizes) to a mixed solution of 100 g of an aqueous aluminum biphosphate solution having a concentration of 50 mass% and 40 g of an aqueous dispersion of acrylic organic resin having a concentration of 30 mass%.

Further, the application liquids were coated on surfaces of the steel sheets and dried under a condition where an achieving temperature of the steel sheets became 285°C. A coating amount of the application liquid was set so that an amount of film after the drying (after the baking) became 2.3 $g/m^2$ per one side of the steel sheet.

Further, the same measurement and determination as those of the experiments using the alumina powder were conducted. Specifically, the measurement of peel force, the measurement of surface roughness Ra, and the visual judgment of appearance were conducted. Results thereof are shown in Table 4.

[Table 4]

| CONDITION NUMBER | CONDITION OF POWDER | | | | | EVALUATION RESULT | | | | | | | COMPREHENSIVE DETERMINATION |
|---|---|---|---|---|---|---|---|---|---|---|---|---|---|
| | TYPE OF POWDER | BET SPECIFIC SURFACE AREA ($m^2/g$) | CUMULATIVE PARTICLE SIZE ($\mu m$) | | RATIO OF ALUMINUM WITH RESPECT TO PHOSPHATE (%) | PEEL FORCE (g) | DETERMINATION | SURFACE ROUGHNESS Ra: $\mu m$ | DETERMINATION | APPEARANCE | DETERMINATION | |
| | | | 50% | 90% | | | | | | | | |
| D 1 | SILICA | 280.4 | 1.3 | 4.1 | 0.5 | 385 | × | 0.31 | ◎ | UNIFORM | ○ | × |
| D 2 | | | | | 1.0 | 83 | ○ | 0.25 | ◎ | UNIFORM | ○ | ○ |
| D 3 | | | | | 5.0 | 32 | ◎ | 0.39 | ○ | UNIFORM | ○ | ○ |
| D 4 | | | | | 10.0 | 25 | ◎ | 0.33 | ◎ | UNIFORM | ○ | ○ |
| D 5 | | | | | 50.0 | 15 | ◎ | 0.41 | ○ | UNIFORM | ○ | ○ |
| D 6 | | | | | 75.0 | 10 | ◎ | 0.58 | ○ | NON-UNIFORM | × | × |
| D 7 | | 7.3 | 5.9 | 22.3 | 5.0 | 22 | ◎ | 0.99 | × | NON-UNIFORM | × | × |
| D 8 | | | | | 10.0 | 12 | ◎ | 1.23 | × | NON-UNIFORM | × | × |
| D 9 | | | | | 50.0 | 10 | ◎ | 1.50 | × | NON-UNIFORM | × | × |
| D 10 | MAGNESIA | 60.1 | 0.9 | 3.4 | 0.5 | 406 | × | 0.21 | ◎ | UNIFORM | ○ | × |
| D 11 | | | | | 1.0 | 79 | ○ | 0.26 | ◎ | UNIFORM | ○ | ○ |
| D 12 | | | | | 5.0 | 39 | ◎ | 0.32 | ◎ | UNIFORM | ○ | ○ |
| D 13 | | | | | 10.0 | 22 | ◎ | 0.42 | ○ | UNIFORM | ○ | ○ |
| D 14 | | | | | 50.0 | 13 | ◎ | 0.51 | ○ | UNIFORM | ○ | ○ |
| D 15 | | | | | 75.0 | 11 | ◎ | 0.68 | ○ | NON-UNIFORM | × | × |
| D 16 | | 2.3 | 7.4 | 25.4 | 5.0 | 29 | ◎ | 0.88 | × | NON-UNIFORM | × | × |
| D 17 | | | | | 10.0 | 19 | ◎ | 1.31 | × | NON-UNIFORM | × | × |
| D 18 | | | | | 50.0 | 11 | ◎ | 1.71 | × | NON-UNIFORM | × | × |

(continued)

| CONDITION NUMBER | CONDITION OF POWDER | | | | | EVALUATION RESULT | | | | | | | COMPREHENSIVE DETERMINATION |
|---|---|---|---|---|---|---|---|---|---|---|---|---|---|
| | TYPE OF POWDER | BET SPECIFIC SURFACE AREA ($m^2/g$) | CUMULATIVE PARTICLE SIZE ($\mu m$) 50% | CUMULATIVE PARTICLE SIZE ($\mu m$) 90% | RATIO OF ALUMINUM WITH RESPECT TO PHOSPHATE (%) | PEEL FORCE (g) | DETERMINATION | SURFACE ROUGHNESS Ra: $\mu m$ | DETERMINATION | APPEARANCE | DETERMINATION | | |
| D 19 | TITANIA | 100.5 | 2.5 | 9.8 | 0.5 | 233 | × | 0.43 | ○ | UNIFORM | ○ | | × |
| D 20 | | | | | 1.0 | 59 | ○ | 0.46 | ○ | UNIFORM | ○ | | ○ |
| D 21 | | | | | 5.0 | 44 | ◎ | 0.58 | ○ | UNIFORM | ○ | | ○ |
| D 22 | | | | | 10.0 | 29 | ◎ | 0.69 | ○ | UNIFORM | ○ | | ○ |
| D 23 | | | | | 50.0 | 18 | ◎ | 0.71 | ○ | UNIFORM | ○ | | ○ |
| D 24 | | | | | 75.0 | 10 | ◎ | 0.79 | ○ | NON-UNIFORM | × | | × |
| D 25 | | 8.8 | 6.2 | 19.5 | 5.0 | 21 | ◎ | 0.95 | × | NON-UNIFORM | × | | × |
| D 26 | | | | | 10.0 | 15 | ◎ | 1.22 | × | NON-UNIFORM | × | | × |
| D 27 | | | | | 50.0 | 14 | ◎ | 1.88 | × | NON-UNIFORM | × | | × |
| D 28 | ZIRCONIA | 48.0 | 3.3 | 10.1 | 0.5 | 611 | × | 0.29 | ◎ | UNIFORM | ○ | | × |
| D 29 | | | | | 1.0 | 88 | ○ | 0.38 | ○ | UNIFORM | ○ | | ○ |
| D 30 | | | | | 5.0 | 37 | ◎ | 0.44 | ○ | UNIFORM | ○ | | ○ |
| D 31 | | | | | 10.0 | 25 | ◎ | 0.49 | ○ | UNIFORM | ○ | | ○ |
| D 32 | | | | | 50.0 | 16 | ◎ | 0.61 | ○ | UNIFORM | ○ | | ○ |
| D 33 | | | | | 75.0 | 12 | ◎ | 0.70 | ○ | NON-UNIFORM | × | | × |
| D 34 | | 9.8 | 8.4 | 18.1 | 5.0 | 35 | ◎ | 0.85 | × | NON-UNIFORM | × | | × |
| D 35 | | | | | 10.0 | 18 | ◎ | 1.22 | × | NON-UNIFORM | × | | × |
| D 36 | | | | | 50.0 | 10 | ◎ | 1.69 | × | NON-UNIFORM | × | | × |

As shown in Table 4, any of silica, magnesia, titania and zirconia was confirmed to show the same tendency as that of alumina. Specifically, an excellent result was obtained when the BET specific surface area was 10 $m^2/g$ or more, the 50% cumulative particle size and the 90% cumulative particle size were 5 μm or less and 15 μm or less, respectively, regarding the particle size distribution measured by the laser diffraction particle size analyzer, and the ratio with respect to aluminum phosphate was 1.0 mass% to 50.0 mass%. Therefore, these inorganic powders can also be used in the same manner as the alumina powder. Further, these powders can also be combined to be used.

From the above description, it can be said that silica, magnesia, titania and zirconia can be used as an inorganic powder, similar to alumina. However, if cost, water dispersibility, handling workability and the like of the powder are taken into consideration, an alumina powder is most suitable.

(Organic resin)

The organic resin contained in the mixed solution used for forming the film is not particularly limited. For instance, a polyacrylic resin, a polystyrene resin, a polyethylene resin, a polyester resin, a polyolefin resin, a polyvinyl alcohol resin, a polypropylene resin, a polyamide resin, a polyurethane resin, a phenol resin, an epoxy resin and a vinyl acetate resin can be used. Further, it is also possible that two kinds or more of these resins are combined to be used.

(Phosphate)

Phosphate is also not particularly limited. For example, magnesium phosphate, calcium phosphate, zinc phosphate, potassium phosphate, sodium phosphate, nickel phosphate and the like, other than aluminum biphosphate, can be used. Further, it is also possible that two kinds or more of these phosphates are combined to be used. It is only required to use an aqueous solution of these phosphates at the time of forming the film.

(Baking temperature of film)

The present inventors also examined a range of baking temperature of the film.

First, steel sheets were cold-rolled to a thickness of 0.35 mm and then annealed at 1020°C, thereby producing a plurality of steel sheets on which films were not formed.

Further, there was prepared an application liquid formed by adding 5 g of alumina powder having an average particle size of 100 nm and a BET specific surface area of 120 $m^2/g$ to a mixed solution of 100 g of an aqueous aluminum biphosphate solution having a concentration of 50 mass% and 40 g of an aqueous dispersion of acrylic organic resin having a concentration of 30 mass%.

Further, the application liquid was coated on surfaces of the steel sheets and dried under various achieving temperatures of the steel sheets. A coating amount of the application liquid was set so that an amount of film after the drying (after the baking) became 3.0 $g/m^2$ per one side of the steel sheet.

Thereafter, a peel force was measured in the same manner as that of the above-described experiments. Results thereof are shown in Table 5.

[Table 5]

| NUMBER | BAKING TEMPERATURE OF FILM | PEEL FORCE | |
|---|---|---|---|
| | (°C) | (g) | DETERMINATION |
| E (1) | 200 | 554 | × |
| E (2) | 250 | 368 | × |
| E (3) | 270 | 54 | ○ |
| E (4) | 285 | 18 | ◎ |
| E (5) | 325 | 15 | ◎ |
| E (6) | 350 | 11 | ◎ |
| E (7) | 400 | 13 | ◎ |
| E (8) | 450 | 10 | ◎ |
| E (9) | 500 | 12 | ◎ |

As shown in Table 5, under conditions of a number E(1) and a number E(2), in which the baking temperature was lower than 270°C, the peel forces were large to be 554 g and 368 g, respectively. This indicates that the adhesion phenomenon occurred.

On the other hand, under conditions of a number E(3) to a number E(9), in which the baking temperature was 270°C or higher, the peel forces were small to be 54 g or less. This indicates that the adhesion phenomenon was prevented. In particular, under the conditions of the number E(4) to the number E(9), in which the baking temperature was 285°C or higher, the peel forces were quite small to be 18 g or less. This indicates that the occurrence of adhesion phenomenon is particularly effectively prevented.
From the above results, it was confirmed that in order to suppress the adhesion phenomenon, the baking temperature of the film is preferably 270°C or higher, and more preferably 285°C or higher.
Note that an upper limit of the baking temperature of the film is not particularly limited.

(Baking atmosphere of film)

The present inventors also examined a baking atmosphere of the film.
The examined atmosphere includes a nitrogen atmosphere and an air atmosphere. Further, a dew point being an index that indicates a concentration of water vapor in the atmosphere was also evaluated by setting various conditions. As a result of this, a dependence of the stickiness and adhesion phenomenon on the atmosphere was not particularly observed. Therefore, the baking atmosphere is not particularly limited.

(Amount of film)

The present inventors also examined an amount of film.
First, steel sheets were cold-rolled to a thickness of 0.5 mm and then annealed at 850°C, thereby producing a plurality of steel sheets on which films were not formed.
Further, there was prepared an application liquid formed by adding 5 g of alumina powder having a 50% cumulative particle size of 0.55 μm, a 90% cumulative particle size of 2.32 μm, and a BET specific surface area of 190 $m^2/g$ to a mixed solution of 100 g of an aqueous aluminum biphosphate solution having a concentration of 50 mass% and 40 g of an aqueous dispersion of acrylic organic resin having a concentration of 30 mass%. Further, there was also prepared an application liquid to which no alumina powder was added.
Further, surfaces of the steel sheets were coated with various amounts of the application liquid, and the drying was performed under a condition where an achieving temperature of the steel sheets became 375°C.
Thereafter, a peel force was measured in the same manner as that of the above-described experiments. Results thereof are shown in Table 6.

[Table 6]

| NUMBER | AMOUNT OF FILM | PRESENCE/ ABSENCE OF ADDITION OF ALUMINA POWDER | PEEL FORCE | |
|---|---|---|---|---|
| | ($g/m^2$) | | (g) | DETERMINATION |
| F (1) | 1.0 | PRESENCE | 14 | ◎ |
| F (2) | 1.3 | " | 16 | ◎ |
| F (3) | 2.0 | " | 18 | ◎ |
| F (4) | 2.5 | " | 21 | ◎ |
| F (5) | 3.3 | " | 27 | ◎ |
| F (6) | 4.5 | " | 32 | ◎ |
| F (7) | 5.4 | " | 40 | ◎ |
| F (8) | 6.5 | " | 48 | ◎ |
| F (9) | 1.0 | ABSENCE | 24 | ◎ |
| F (10) | 1.3 | " | 26 | ◎ |
| F (11) | 2.0 | " | 51 | ○ |
| F (12) | 2.5 | " | 101 | × |
| F (13) | 3.3 | " | 206 | × |
| F (14) | 4.5 | " | 385 | × |
| F (15) | 5.4 | " | 603 | × |
| F (16) | 6.5 | " | 920 | × |

As shown in Table 6, under each of conditions of a number F(1) to a number F(8), in which the alumina powder was added, the peel force was small to be 14 g to 48 g. This indicates that the adhesion phenomenon was prevented.

On the other hand, under conditions of a number F(9) and a number F(10), in which the alumina powder was not added, the peel forces were small to be 24 g and 26 g, respectively. However, when compared to the number F(1) and the number F(2) with the same amount of film, the peel forces of the number F(9) and the number F(10) were large.

Further, under a condition of a number F(11), in which the alumina powder was not added, the peel force was rather small to be 51 g. Accordingly, it cannot be clearly said that the adhesion phenomenon occurred. However, the peel force under the condition of the number F(11) was twice or more as large as that under the condition of the number F(3) with the same amount of film.

Further, under conditions of a number F(12) to a number F(16), in which the alumina powder was not added, the peel forces were large to be 100 g or more. Specifically, the peel forces of the number F(12) to the number F(16) were remarkably larger than those of the number F(4) to the number F(8) with the same amount of film. This indicates that the adhesion phenomenon occurred.

From the above results, it was confirmed that if the amount of film is at least within a range of 1.0 $g/m^2$ to 6.5 $g/m^2$, the peel force becomes small in accordance with the addition of the alumina powder. In particular, when the amount of film is 2.0 $g/m^2$ or more, the decrease in the peel force in accordance with the addition of the alumina powder is significant, so that it was confirmed that the amount of film is preferably 2.0 $g/m^2$ or more.

Note that an upper limit of the amount of film is not particularly limited.

(Temperature range)

The present inventors examined in which level of a temperature range in the vicinity of room temperature the adhesion phenomenon is effectively suppressed.

First, steel sheets were cold-rolled to a thickness of 0.5 mm and then annealed at 900°C, thereby producing a plurality of steel sheets on which films were not formed.

Further, there was prepared an application liquid formed by adding 5 g of alumina powder having a 50% cumulative particle size of 1.55 μm, a 90% cumulative particle size of 3.57 μm, and a BET specific surface area of 130 $m^2/g$ to a mixed solution of 100 g of an aqueous aluminum biphosphate solution having a concentration of 50 mass% and 40 g of an aqueous dispersion of acrylic organic resin having a concentration of 30 mass%.

Further, the application liquid was coated on surfaces of the steel sheets and dried under a condition where an achieving temperature of the steel sheets became 375°C. A coating amount of the application liquid was set so that an amount of film after the drying (after the baking) became 4.1 $g/m^2$ per one side of the steel sheet.

Thereafter, ten pieces of non-oriented electrical steel sheets were put, while being fixed, into a thermo-hygrostat in which the temperature was kept at -30°C to +70°C and the humidity was kept at 90%. This state simulated a situation where the non-oriented electrical steel sheets rolled in a coil shape are being transported.

Further, a peel force was measured in the same manner as that of the above-described experiments. Results thereof are shown in Table 7.

[Table 7]

| NUMBER | SET TEMPERATURE IN THERMO-HYGROSTAT THERMOSTATIC | PEEL FORCE | |
|---|---|---|---|
| | (°C) | (g) | DETERMINATION |
| G (1) | -30 | 22 | ◎ |
| G (2) | -20 | 25 | ◎ |
| G (3) | -10 | 21 | ◎ |
| G (4) | 0 | 20 | ◎ |
| G (5) | +10 | 23 | ◎ |
| G (6) | +30 | 27 | ◎ |
| G (7) | +50 | 24 | ◎ |
| G (8) | +60 | 51 | ○ |
| G (9) | +70 | 101 | × |

As shown in Table 7, under each of conditions of a number G(1) to a number G(8), in which the temperature was +60°C or lower, the peel force was small to be 21 g to 51 g. This indicates that the occurrence of adhesion phenomenon was prevented.

On the other hand, under a condition of a number G(9), in which the temperature was +70°C, the peel force was large to be 101 g. This indicates that the adhesion phenomenon was about to occur.

From the above results, it was confirmed that the adhesion phenomenon is suppressed when the temperature is at least within a range of -30°C to +60°C. Specifically, the temperature after the stacking is preferably +60°C or lower.
Note that a lower limit of the temperature after the stacking is not particularly limited.
In recent years, manufacturing bases of motor cores have been increasing in Southeast Asian nations under an environment of high temperature and high humidity. Specifically, a demand of non-oriented electrical steel sheets on which inorganic-organic composite films are formed has been increasing in the Southeast Asian nations under the environment of high temperature and high humidity. Meanwhile, the non-oriented electrical steel sheets have been manufactured in another country, which is, for example, Japan. Therefore, in many cases, the non-oriented electrical steel sheets have been transported by ships. Accordingly, the suppression of adhesion phenomenon leads to reduce workloads which have had to be performed by the manufacture of motor cores.
Note that as long as the steel sheet, namely, the base material on which the inorganic-organic composite film is formed functions as a non-oriented electrical steel sheet, a composition thereof is not particularly limited.

EXAMPLE

(Example 1)

In an example 1, an effect of the present invention regarding an alumina powder was verified. First, steel sheets were cold-rolled to a thickness of 0.5 mm and then annealed at 880°C, thereby producing a plurality of steel sheets on which films were not formed.
Further, there was prepared an application liquid formed by adding 10 g of alumina powder having a 50% cumulative particle size of 0.35 μm, a 90% cumulative particle size of 1.25 μm, and a BET specific surface area of 220 $m^2/g$ to a mixed solution of 100 g of an aqueous aluminum biphosphate solution having a concentration of 50 mass.% and 40 g of an aqueous dispersion of acrylic organic resin having a concentration of 30 mass%. Further, there was also prepared an application liquid containing no alumina powder.
Further, the application liquids were coated on surfaces of the steel sheets and dried under a condition where an achieving temperature of the steel sheets became 315°C. A coating amount of the application liquid was set so that an amount of film after the drying (after the baking) became 3.1 $g/m^2$ per one side of the steel sheet.
Thereafter, the measurement of peel force, the measurement of surface roughness Ra, and the visual judgment of appearance were conducted in the same manner as that of the above-described experiments. Results thereof are shown in Table 8.

[Table 8]

| CONDITION | CONDITION OF POWDER | | | | | EVALUATION RESULT | | | | | | | COMPREHENSIVE DETERMINATION |
|---|---|---|---|---|---|---|---|---|---|---|---|---|---|
| | TYPE OF POWDER | BET SPECIFIC SURFACE AREA ($m^2/g$) | CUMULATIVE PARTICLE SIZE ($\mu m$) | | RATIO OF ALUMINUM WITH RESPECT TO PHOSPHATE (%) | PEEL FORCE (g) | DETERMINATION | SURFACE ROUGHNESS Ra: $\mu m$ | DETERMINATION | APPEARANCE | DETERMINATION | |
| | | | 50% | 90% | | | | | | | | |
| EXAMPLE 1 | ALUMINA | 220 | 0.35 | 1.25 | 20.0 | 19 | ◎ | 0.22 | ◎ | UNIFORM | ○ | ○ |
| COMPARATIVE EXAMPLE | NO ADDITION OF ALUMINA POWDER | | | | | 123 | × | 0.21 | ◎ | UNIFORM | ○ | × |

As shown in Table 8, when the application liquid to which the alumina powder was added was used, the peel force became small, compared to a case where the application liquid containing no alumina powder was used. Specifically, it was possible to suppress the adhesion phenomenon in the example 1.

(Example 2)

In an example 2, an effect of the present invention regarding a silica powder was verified. First, steel sheets were cold-rolled to a thickness of 0.25 mm and then annealed at 1050°C, thereby producing a plurality of steel sheets on which films were not formed.

Further, there was prepared an application liquid formed by adding 25 g of silica powder having a 50% cumulative particle size of 0.55 μm, a 90% cumulative particle size of 1.05 μm, and a BET specific surface area of 380 $m^2/g$ to a mixed solution of 100 g of an aqueous aluminum biphosphate solution having a concentration of 50 mass% and 40 g of an aqueous dispersion of acrylic organic resin having a concentration of 30 mass%. Further, there was also prepared an application liquid containing no silica powder.

Further, the application liquids were coated on surfaces of the steel sheets and dried under a condition where an achieving temperature of the steel sheets became 355°C. A coating amount of the application liquid was set so that an amount of film after the drying (after the baking) became 3.9 $g/m^2$ per one side of the steel sheet.

Thereafter, the measurement of peel force, the measurement of surface roughness Ra, and the visual judgment of appearance were conducted in the same manner as that of the above-described experiments. Results thereof are shown in Table 9.

[Table 9]

| CONDITION | CONDITION OF POWDER | | | | | EVALUATION RESULT | | | | | | | COMPREHENSIVE DETERMINATION |
|---|---|---|---|---|---|---|---|---|---|---|---|---|---|
| | TYPE OF POWDER | BET SPECIFIC SURFACE AREA ($m^2/g$) | CUMULATIVE PARTICLE SIZE ($\mu m$) | | RATIO OF ALUMINUM WITH RESPECT TO PHOSPHATE (%) | PEEL FORCE (g) | DETERMINATION | SURFACE ROUGHNESS Ra: $\mu m$ | DETERMINATION | APPEARANCE | DETERMINATION | | |
| | | | 50% | 90% | | | | | | | | | |
| EXAMPLE 2 | SILICA | 380 | 0.55 | 1.05 | 50.0 | 15 | ◎ | 0.19 | ◎ | UNIFORM | ○ | | ○ |
| COMPARATIVE EXAMPLE | NO ADDITION OF SILICA POWDER | | | | | 223 | × | 0.18 | ◎ | UNIFORM | ○ | | × |

As shown in Table 9, when the application liquid to which the silica powder was added was used, the peel force became small, compared to a case where the application liquid containing no silica powder was used. Specifically, it was possible to suppress the adhesion phenomenon in the example 2.

(Example 3)

In an example 3, an effect of the present invention regarding a magnesia powder was verified. First, steel sheets were cold-rolled to a thickness of 0.55 mm and then annealed at 850°C, thereby producing a plurality of steel sheets on which films were not formed.

Further, there was prepared an application liquid formed by adding 2.5 g of magnesia powder having a 50% cumulative particle size of 0.34 μm, a 90% cumulative particle size of 2.12 μm, and a BET specific surface area of 150 $m^2/g$ to a mixed solution of 100 g of an aqueous aluminum biphosphate solution having a concentration of 50 mass% and 40 g of an aqueous dispersion of acrylic organic resin having a concentration of 30 mass%. Further, there was also prepared an application liquid containing no magnesia powder.

Further, the application liquids were coated on surfaces of the steel sheets and dried under a condition where an achieving temperature of the steel sheets became 285°C. A coating amount of the application liquid was set so that an amount of film after the drying (after the baking) became 2.0 $g/m^2$ per one side of the steel sheet.

Thereafter, the measurement of peel force, the measurement of surface roughness Ra, and the visual judgment of appearance were conducted in the same manner as that of the above-described experiments. Results thereof are shown in Table 10.

[Table 10]

| CONDITION | CONDITION OF POWDER | | | | | EVALUATION RESULT | | | | | | COMPREHENSIVE DETERMINATION |
|---|---|---|---|---|---|---|---|---|---|---|---|---|
| | TYPE OF POWDER | BET SPECIFIC SURFACE AREA ($m^2/g$) | CUMULATIVE PARTICLE SIZE ($\mu m$) | | RATIO OF ALUMINUM WITH RESPECT TO PHOSPHATE (%) | PEEL FORCE (g) | DETERMINATION | SURFACE ROUGHNESS Ra: $\mu m$ | DETERMINATION | APPEARANCE | DETERMINATION | |
| | | | 50% | 90% | | | | | | | | |
| EXAMPLE 3 | MAGNESIA | 150 | 0.34 | 2.12 | 5.0 | 19 | ◎ | 0.25 | ◎ | UNIFORM | ○ | ○ |
| COMPARATIVE EXAMPLE | NO ADDITION OF MAGNESIA POWDER | | | | | 123 | × | 0.24 | ◎ | UNIFORM | ○ | × |

As shown in Table 10, when the application liquid to which the magnesia powder was added was used, the peel force became small, compared to a case where the application liquid containing no magnesia powder was used. Specifically, it was possible to suppress the adhesion phenomenon in the example 3.

(Example 4)

In an example 4, an effect of the present invention regarding a titania powder was verified. First, steel sheets were cold-rolled to a thickness of 0.45 mm and then annealed at 930°C, thereby producing a plurality of steel sheets on which films were not formed.

Further, there was prepared an application liquid formed by adding 3.0 g of titania powder having a 50% cumulative particle size of 2.56 μm, a 90% cumulative particle size of 8.92 μm, and a BET specific surface area of 220 $m^2/g$ to a mixed solution of 100 g of an aqueous aluminum biphosphate solution having a concentration of 50 mass% and 40 g of an aqueous dispersion of acrylic organic resin having a concentration of 30 mass%. Further, there was also prepared an application liquid containing no titania powder.

Further, the application liquids were coated on surfaces of the steel sheets and dried under a condition where an achieving temperature of the steel sheets became 315°C. A coating amount of the application liquid was set so that an amount of film after the drying (after the baking) became 2.5 $g/m^2$ per one side of the steel sheet.

Thereafter, the measurement of peel force, the measurement of surface roughness Ra, and the visual judgment of appearance were conducted in the same manner as that of the above-described experiments. Results thereof are shown in Table 11.

[Table 11]

| CONDITION | CONDITION OF POWDER | | | | | EVALUATION RESULT | | | | | | | COMPREHENSIVE DETERMINATION |
|---|---|---|---|---|---|---|---|---|---|---|---|---|---|
| | TYPE OF POWDER | BET SPECIFIC SURFACE AREA ($m^2/g$) | CUMULATIVE PARTICLE SIZE ($\mu m$) | | RATIO OF ALUMINUM WITH RESPECT TO PHOSPHATE (%) | PEEL FORCE (g) | DETERMINATION | SURFACE ROUGHNESS Ra: $\mu m$ | DETERMINATION | APPEARANCE | DETERMINATION | | |
| | | | 50% | 90% | | | | | | | | | |
| EXAMPLE 4 | TITANIA | 220 | 2.56 | 8.92 | 6.0 | 11 | ◎ | 0.45 | ○ | UNIFORM | ○ | | ○ |
| COMPARATIVE EXAMPLE | NO ADDITION OF TITANIA POWDER | | | | | 108 | × | 0.43 | ○ | UNIFORM | ○ | | × |

As shown in Table 11, when the application liquid to which the titania powder was added was used, the peel force became small, compared to a case where the application liquid containing no titania powder was used. Specifically, it was possible to suppress the adhesion phenomenon in the example 4.

(Example 5)

In an example 5, an effect of the present invention regarding a zirconia powder was verified. First, steel sheets were cold-rolled to a thickness of 0.35 mm and then annealed at 990°C, thereby producing a plurality of steel sheets on which films were not formed.

Further, there was prepared an application liquid formed by adding 1.0 g of zirconia powder having a 50% cumulative particle size of 4.33 μm, a 90% cumulative particle size of 10.12 μm, and a BET specific surface area of 90 $m^2/g$ to a mixed solution of 100 g of an aqueous aluminum biphosphate solution having a concentration of 50 mass% and 40 g of an aqueous dispersion of acrylic organic resin having a concentration of 30 mass%. Further, there was also prepared an application liquid containing no zirconia powder.

After that, the application liquids were coated on surfaces of the steel sheets and dried under a condition where an achieving temperature of the steel sheets became 315°C. A coating amount of the application liquid was set so that an amount of film after the drying (after the baking) became 2.5 $g/m^2$ per one side of the steel sheet.

Thereafter, the measurement of peel force, the measurement of surface roughness Ra, and the visual judgment of appearance were conducted in the same manner as that of the above-described experiments. Results thereof are shown in Table 12.

[Table 12]

| CONDITION | CONDITION OF POWDER | | | | | EVALUATION RESULT | | | | | | | COMPREHENSIVE DETERMINATION |
|---|---|---|---|---|---|---|---|---|---|---|---|---|---|
| | TYPE OF POWDER | BET SPECIFIC SURFACE AREA ($m^2/g$) | CUMULATIVE PARTICLE SIZE ($\mu m$) | | RATIO OF ALUMINUM WITH RESPECT TO PHOSPHATE (%) | PEEL FORCE (g) | DETERMINATION | SURFACE ROUGHNESS Ra: $\mu m$ | DETERMINATION | APPEARANCE | DETERMINATION | |
| | | | 50% | 90% | | | | | | | | |
| EXAMPLE 5 | ZIRCONIA | 90 | 4.33 | 10.12 | 2.0 | 13 | ◎ | 0.36 | ○ | UNIFORM | ○ | ○ |
| COMPARATIVE EXAMPLE | NO ADDITION OF ZIRCONIA POWDER | | | | | 145 | × | 0.33 | ◎ | UNIFORM | ○ | × |

As shown in Table 12, when the application liquid to which the zirconia powder was added was used, the peel force became small, compared to a case where the application liquid containing no zirconia powder was used. Specifically, it was possible to suppress the adhesion phenomenon in the example 5.

(Examples 6 to 11, Comparative examples 12 to 17)

In examples 6 to 11 and comparative examples 12 to 17, various organic resins were used, and further, various ceramics powders were used as inorganic powders. First, steel sheets were cold-rolled to a thickness of 0.5 mm and then annealed at 950°C, thereby producing a plurality of steel sheets on which films were not formed.

Further, there were prepared application liquids formed by adding each of the ceramics powders to a mixed solution of 100 g of an aqueous aluminum biphosphate solution having a concentration of 50 mass% and 40 g of an aqueous dispersion of acrylic organic resin having a concentration of 30 mass%. The types of the organic resins, materials and amounts of the ceramics powders are shown in Table 13. Note that "ratio with respect to solid content of phosphate" indicates a ratio of a mass (g) of alumina powder, silica powder, titania powder or zirconia powder with respect to a solid content (g) of aluminum biphosphate contained in an aqueous aluminum biphosphate solution having a concentration of 50 mass%.

Further, the application liquids were coated on surfaces of the steel sheets and dried under a condition where an achieving temperature of the steel sheets became 320°C. A coating amount of the application liquid was set so that an amount of film after the drying (after the baking) became 3.5 $g/m^2$ per one side of the steel sheet.

Thereafter, the measurement of peel force, the measurement of surface roughness Ra, and the visual judgment of appearance were conducted in the same manner as that of the above-described experiments. Results thereof are shown in Table 13.

[Table 13]

| CONDITION | INORGANIC POWDER | | | | | ORGANIC RESIN | RESULT OF PROPERTY EVALUATION | | | | | | |
|---|---|---|---|---|---|---|---|---|---|---|---|---|---|
| | TYPE | SPECIFIC SURFACE AREA MEASURED BY BET METHOD ($m^2/g$) | MEASUREMENT USING LASER SCATTERING/DIFFRACTIO N PARTICLE SIZE DISTRIBUTION METER | | RATIO WITH RESPECT TO SOLID CONTENT OF PHOSPHATE (%) | TYPE | ADHESION RESISTANCE | | SURFACE ROUGHNESS | | APPEARANCE | | COMPREHENSIVE DETERMINATION |
| | | | 50% CUMULATIVE PARTICLE SIZE (μm) | 90% CUMULATIVE PARTICLE SIZE(μm) | | | PEEL FORCE (g) | EVALUATION | Ra (μm) | EVALUATION | VISUAL | EVALUATION | |
| EXAMPLE 6 | ALUMINA | 10.0 | 3.8 | 12.1 | 12 | POLYACRYL | 32 | ◎ | 0.45 | ○ | UNIFORM | ○ | ○ |
| EXAMPLE 7 | SILICA | 22.5 | 5.0 | 13.8 | 25 | POLYSTYRENE | 21 | ◎ | 0.61 | ○ | UNIFORM | ○ | ○ |
| EXAMPLE 8 | TITANIA | 56.1 | 4.1 | 15.0 | 35 | POLYETHYLENE | 36 | ◎ | 0.72 | ○ | UNIFORM | ○ | ○ |
| EXAMPLE 9 | ZIRCONIA | 128.5 | 2.2 | 7.3 | 1 | VINYL ACETATE | 45 | ◎ | 0.21 | ◎ | UNIFORM | ○ | ○ |
| EXAMPLE 10 | ALUMINA | 326.8 | 3.8 | 5.6 | 50 | POLYPROPYLENE | 15 | ◎ | 0.42 | ○ | UNIFORM | ○ | ○ |
| EXAMPLE 11 | ALUMINA | 221.5 | 1.5 | 7.6 | 10 | POLYACRYL-STYRENE | 19 | ◎ | 0.29 | ◎ | UNIFORM | ○ | ○ |
| COMPARATIVE EXAMPLE 12 | ALUMINA | 3.1 | 4.1 | 10.5 | 10 | POLYACRYL | 101 | × | 0.51 | ○ | UNIFORM | ○ | × |
| COMPARATIVE EXAMPLE 13 | SILICA | 20.5 | 8.7 | 14.2 | 20 | POLYSTYRENE | 24 | ◎ | 0.94 | × | UNIFORM | ○ | × |
| COMPARATIVE EXAMPLE 14 | TITANIA | 45.7 | 4.4 | 25.9 | 30 | POLYETHYLENE | 36 | ◎ | 1.01 | × | UNIFORM | ○ | × |

(continued)

| CONDITION | INORGANIC POWDER | | | | | ORGANIC RESIN | RESULT OF PROPERTY EVALUATION | | | | | | |
|---|---|---|---|---|---|---|---|---|---|---|---|---|---|
| | TYPE | SPECIFIC SURFACE AREA MEASURED BY BET METHOD ($m^2/g$) | MEASUREMENT USING LASER SCATTERING/DIFFRACTIO N PARTICLE SIZE DISTRIBUTION METER | | RATIO WITH RESPECT TO SOLID CONTENT OF PHOSPHATE (%) | TYPE | ADHESION RESISTANCE | | SURFACE ROUGHNESS | | APPEARANCE | | COMPREHENSIVE DETERMINATION |
| | | | 50% CUMULATIVE PARTICLE SIZE ($\mu$m) | 90% CUMULATIVE PARTICLE SIZE($\mu$m) | | | PEEL FORCE (g) | EVALUATION | Ra ($\mu$m) | EVALUATION | VISUAL | EVALUATION | |
| COMPARATIVE EXAMPLE 15 | ZIRCONIA | 120.3 | 3.2 | 12.6 | 0.5 | VINYL ACETATE | 136 | × | 0.76 | ○ | UNIFORM | ○ | × |
| COMPARATIVE EXAMPLE 16 | ALUMINA | 210.8 | 4.9 | 13.7 | 75 | POLYPROPYLENE | 22 | ◎ | 0.68 | ○ | NONUNIFORM | × | × |
| COMPARATIVE EXAMPLE 17 | ALUMINA | 2.4 | 6.1 | 16.3 | 60 | POLYACRYLSTYRENE | 101 | × | 1.26 | × | NONUNIFORM | × | × |

As shown in Table 13, in the comparative example 12 to the comparative example 17, in which at least one of the BET specific surface area, the particle size distribution or the ratio with respect to solid content of phosphate is out of the range of the present invention, the evaluation of at least one of the peel force, the surface roughness or the appearance was lowered. Therefore, a comprehensive determination of the comparative examples was made as ×. Meanwhile, the examples 6 to 11, in which the BET specific surface area, the particle size distribution or the ratio with respect to solid content of phosphate were within the range of the present invention achieved high evaluation in every item, so that a comprehensive determination thereof was made as ○.

INDUSTRIAL APPLICABILITY

The present invention can be utilized in, for example, an electrical steel sheet manufacturing industry and an industry using electrical steel sheets.

## Claims

**1.** A manufacturing method of a non-oriented electrical steel sheet, comprising:

coating an application liquid which contains an inorganic component and an organic resin on a surface of a steel sheet; and
forming an inorganic-organic composite film by baking the application liquid on the surface of the steel sheet, wherein the application liquid contains phosphate as the inorganic component, and

- wherein the application liquid further contains an inorganic powder having a BET specific surface area of 10 $m^2/g$ or more and exhibiting a particle size distribution with a 50% cumulative particle size of 5 μm or less and with a 90% cumulative particle size of 15 μm or less when measurex by a laser diffraction particle size analyzer, the powder being contained at a ratio of no less than 1 mass%, nor more than 50 mass% with respect to a solid content of said phosphate.

**2.** The manufacturing method of a non-oriented electrical steel sheet according to claim 1, wherein the application liquid does not contain a chromate-based compound.

**3.** The manufacturing method of a non-oriented electrical steel sheet according to claim 1 or 2, wherein the application liquid contains, as the inorganic powder, at least one kind selected from a group consisting of alumina powder, silica powder, magnesia powder, titania powder and zirconia powder.

**4.** The manufacturing method of a non-oriented electrical steel sheet according to any one of claims 1 to 3, wherein the application liquid is formed of a mixed solution of an aqueous aluminum biphosphate solution and an aqueous dispersion of organic resin, and the inorganic powder.

**5.** The manufacturing method of a non-oriented electrical steel sheet according to any one of claims 1 to 4, wherein a temperature at the baking the application liquid on the surface of the steel sheet is set to 270°C or higher.

**6.** A non-oriented electrical steel sheet, obtainable by the manufacturing method of claim 1, comprising an inorganic-organic composite film formed on a surface,
wherein said inorganic-organic composite film contains:

phosphate; and
an inorganic powder having a BET specific surface area of 10 $m^2/g$ or more and exhibiting a particle size distribution with a 50% cumulative particle size of 5 μm or less and with a 90% cumulative particle size of 15 μm or less when measured by a laser diffraction particle size analyzer, and
wherein a content of the inorganic powder is no less than 1 mass%, nor more than 50 mass% with respect to a solid content of said phosphate.

**7.** The non-oriented electrical steel sheet according to claim 6, wherein said inorganic-organic composite film does not contain a chromate-based compound.

**8.** The non-oriented electrical steel sheet according to claim 6 or 7, wherein said inorganic-organic composite film contains, as the inorganic powder, at least one kind selected from a group consisting of alumina powder, silica powder, magnesia powder, titania powder and zirconia powder.

**9.** An application liquid for a non-oriented electrical steel sheet, containing:

phosphate as an inorganic component and an organic resin; and an inorganic powder having a BET specific surface area of $m^2/g$ or more and exhibiting a particle size distribution with a 50% cumulative particle size of 5 μm or less and with a 90% cumulative particle size of 15 μm or less when measured by a laser diffraction particle size analyzer, the powder being contained at a ratio of no less than 1 mass%, nor more than 50 mass% with respect to a solid content of said phosphate.

**10.** The application liquid for a non-oriented electrical steel sheet according to claim 9, wherein a chromate-based compound is not contained.

**11.** The application liquid for a non-oriented electrical steel sheet according to claim 9 or 10, wherein at least one kind selected from a group consisting of alumina powder, silica powder, magnesia powder, titania powder and zirconia powder is contained as said inorganic powder.

## Patentansprüche

**1.** Ein Herstellungsverfahren für ein nicht-orientiertes Elektrostahlblech, umfassend:

Aufbringen einer Auftragsflüssigkeit, die einen anorganischen Bestandteil und ein organisches Harz enthält, auf eine Oberfläche eines Stahlblechs; und
Bilden eines anorganisch-organischen Verbundfilms durch Einbrennen der Auftragsflüssigkeit auf der Oberfläche des Stahlblechs,
wobei die Auftragsflüssigkeit Phosphat als den anorganischen Bestandteil enthält und
wobei die Auftragsflüssigkeit weiter ein anorganisches Pulver mit einer spezifischen Oberfläche nach BET von 10 $m^2/g$ oder mehr und einer Teilchengrößenverteilung mit einer 50% kumulativen Teilchengröße von 5 μm oder weniger und mit einer 90% kumulativen Teilchengröße von 15 μm oder weniger, gemessen durch einen Laserbeugungs-Teilchengrößenanalysator, enthält, wobei das Pulver in einem Verhältnis von nicht weniger als 1 Massen-%, nicht mehr als 50 Massen-%, bezogen auf einen Feststoffgehalt des Phosphats, enthalten ist.

**2.** Das Herstellungsverfahren für ein nicht-orientiertes Elektrostahlblech nach Anspruch 1, wobei die Auftragsflüssigkeit keine Verbindung auf Chromatbasis enthält.

**3.** Das Herstellungsverfahren für ein nicht-orientiertes Elektrostahlblech nach Anspruch 1 oder 2, wobei die Auftragsflüssigkeit als das anorganische Pulver mindestens eine Art, ausgewählt aus einer Gruppe bestehend aus Aluminiumoxidpulver, Siliciumdioxidpulver, Magnesiumoxidpulver, Titandioxidpulver und Zirkoniumdioxidpulver, enthält.

**4.** Das Herstellungsverfahren für ein nicht-orientiertes Elektrostahlblech nach einem der Ansprüche 1 bis 3, wobei die Auftragsflüssigkeit aus einer gemischten Lösung einer wässrigen Aluminiumbiphosphatlösung und einer wässrigen Dispersion von organischem Harz und dem anorganischen Pulver gebildet wird.

**5.** Das Herstellungsverfahren für ein nicht-orientiertes Elektrostahlblech nach einem der Ansprüche 1 bis 4, wobei eine Temperatur beim Einbrennen der Auftragsflüssigkeit auf der Oberfläche des Stahlblechs auf 270°C oder höher eingestellt wird.

**6.** Ein nicht-orientiertes Elektrostahlblech, erhältlich durch das Herstellungsverfahren nach Anspruch 1, umfassend einen auf einer Oberfläche gebildeten anorganisch-organischen Verbundfilm,
wobei der anorganisch-organische Verbundfilm enthält:

Phosphat; und
ein anorganisches Pulver, das eine spezifische Oberfläche nach BET von 10 $m^2/g$ oder mehr hat und eine Teilchengrößenverteilung mit einer 50% kumulativen Teilchengröße von 5 μm oder weniger und mit einer 90% kumulativen Teilchengröße von 15 μm oder weniger, gemessen durch einen Laserbeugungs-Teilchengrößenanalysator, aufweist

und wobei ein Gehalt des anorganischen Pulvers nicht weniger als 1 Massen-%, nicht mehr als 50 Massen-%, bezogen auf einen Feststoffgehalt des Phosphats, beträgt.

7. Das nicht-orientierte Elektrostahlblech nach Anspruch 6, wobei der anorganisch-organische Verbundfilm keine Verbindung auf Chromatbasis enthält.

8. Das nicht-orientierte Elektrostahlblech nach Anspruch 6 oder 7, wobei der anorganisch-organische Verbundfilm als das anorganische Pulver mindestens eine Art, ausgewählt aus einer Gruppe bestehend aus Aluminiumoxidpulver, Siliciumdioxidpulver, Magnesiumoxidpulver, Titandioxidpulver und Zirkoniumdioxidpulver, enthält.

9. Eine Auftragsflüssigkeit für ein nicht-orientiertes Elektrostahlblech, enthaltend:

   Phosphat als einen anorganischen Bestandteil und ein organisches Harz; und
   ein anorganisches Pulver, das eine spezifische Oberfläche nach BET von 10 $m^2/g$ oder mehr hat und eine Teilchengrößenverteilung mit einer 50% kumulativen Teilchengröße von 5 $\mu$m oder weniger und mit einer 90% kumulativen Teilchengröße von 15 $\mu$m oder weniger, gemessen durch einen Laserbeugungs-Teilchengrößenanalysator, aufweist, wobei das Pulver in einem Verhältnis von nicht weniger als 1 Massen-%, nicht mehr als 50 Massen-%, bezogen auf einen Feststoffgehalt des Phosphats, enthalten ist.

10. Die Auftragsflüssigkeit für ein nicht-orientiertes Elektrostahlblech nach Anspruch 9, wobei keine Verbindung auf Chromatbasis enthalten ist.

11. Die Auftragsflüssigkeit für ein nicht-orientiertes Elektrostahlblech nach Anspruch 9 oder 10, wobei mindestens eine Art, ausgewählt aus einer Gruppe bestehend aus Aluminiumoxidpulver, Siliciumdioxidpulver, Magnesiumoxidpulver, Titandioxidpulver und Zirkoniumdioxidpulver, als das anorganische Pulver enthalten ist.

**Revendications**

1. Procédé de fabrication d'une tôle d'acier électrique non-orienté, comprenant :

   le revêtement d'un liquide d'application qui contient un constituant inorganique et une résine organique sur une surface d'une tôle d'acier ; et
   la formation d'un film composite inorganique-organique par cuisson du liquide d'application sur la surface de la tôle d'acier,
   dans lequel le liquide d'application contient du phosphate comme le constituant inorganique, et
   dans lequel le liquide d'application contient de plus une poudre inorganique ayant une surface spécifique BET de 10 $m^2/g$ ou supérieure et présentant une distribution de taille de particule avec une taille de particule cumulée à 50 % de 5 $\mu$m ou inférieure et avec une taille de particule cumulée à 90 % de 15 $\mu$m ou inférieure lorsqu'elle est mesurée par un dispositif d'analyse de taille de particule par diffraction laser, la poudre étant contenue à un rapport qui n'est pas inférieur à 1 % en masse, ni supérieur à 50 % en masse par rapport à une teneur en matière solide dudit phosphate.

2. Procédé de fabrication d'une tôle d'acier électrique non-orienté selon la revendication 1, dans lequel le liquide d'application ne contient pas un composé à base de chromate.

3. Procédé de fabrication d'une tôle d'acier électrique non-orienté selon la revendication 1 ou 2,
   dans lequel le liquide d'application contient, comme la poudre inorganique, au moins un type choisi dans le groupe constitué de poudre d'alumine, poudre de silice, poudre d'oxyde de magnésium, poudre d'oxyde de titane et poudre d'oxyde de zirconium.

4. Procédé de fabrication d'une tôle d'acier électrique non-orienté selon l'une quelconque des revendications 1 à 3, dans lequel le liquide d'application est formé d'une solution mixte d'une solution aqueuse de biphosphate d'aluminium et d'une dispersion aqueuse de résine organique, et de la poudre inorganique.

5. Procédé de fabrication d'une tôle d'acier électrique non-orienté selon l'une quelconque des revendications 1 à 4, dans lequel une température à la cuisson du liquide d'application sur la surface de la tôle d'acier est fixée à 270°C ou supérieure.

**6.** Tôle d'acier électrique non-orienté pouvant être obtenue par le procédé de fabrication selon la revendication 1, comprenant
un film composite inorganique-organique formé sur une surface,
dans laquelle ledit film composite inorganique-organique contient :

du phosphate ; et
une poudre inorganique ayant une surface spécifique BET de 10 $m^2/g$ ou supérieure et présentant une distribution de taille de particule avec une taille de particule cumulée à 50 % de 5 $\mu m$ ou inférieure et avec une taille de particule cumulée à 90 % de 15 $\mu m$ ou inférieure lorsqu'elle est mesurée par un dispositif d'analyse de taille de particule par diffraction laser et
dans laquelle une teneur de la poudre inorganique n'est pas inférieure à 1 % en masse, ni supérieure à 50 % en masse par rapport à une teneur en matière solide dudit phosphate.

**7.** Tôle d'acier électrique non-orienté selon la revendication 6, dans laquelle ledit film composite inorganique-organique ne contient pas un composé à base de chromate.

**8.** Tôle d'acier électrique non-orienté selon la revendication 6 ou 7, dans laquelle ledit film composite inorganique-organique contient, comme la poudre inorganique, au moins un type choisi dans un groupe constitué de poudre d'alumine, poudre de silice, poudre d'oxyde de magnésium, poudre d'oxyde de titane et poudre d'oxyde de zirconium.

**9.** Liquide d'application pour une tôle d'acier électrique non-orienté contenant :

du phosphate comme un constituant inorganique et une résine organique ; et une poudre inorganique ayant une surface spécifique BET de 10 $m^2/g$ ou supérieure et présentant une distribution de taille de particule avec une taille de particule cumulée à 50 % de 5 $\mu m$ ou inférieure et avec une taille de particule cumulée à 90 % de 15 $\mu m$ ou inférieure lorsqu'elle est mesurée par un dispositif d'analyse de taille de particule par diffraction laser, la poudre étant contenue à un rapport qui n'est pas inférieur à 1 % en masse, ni supérieur à 50 % en masse par rapport à une teneur en matière solide dudit phosphate.

**10.** Liquide d'application pour une tôle d'acier électrique non-orienté selon la revendication 9, dans lequel un composé à base de chromate n'est pas contenu.

**11.** Liquide d'application pour une tôle d'acier électrique non-orienté selon la revendication 9 ou 10, dans lequel au moins un type choisi dans un groupe constitué de poudre d'alumine, poudre de silice, poudre d'oxyde de magnésium, poudre d'oxyde de titane et poudre d'oxyde de zirconium est contenu comme ladite poudre inorganique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 59021927 A
- JP H9122582 B
- JP H9136061 B
- JP H9314733 B
- JP H9323066 B
- JP H9327886 B
- JP H1036976 B
- JP H1034812 B
- JP H10128903 B
- JP H10128904 B
- JP H10130858 B
- JP H10130859 B
- JP 2001240916 A
- JP 2004197202 A
- JP H6330338 B
- JP H741913 B
- JP H7166365 B
- JP H1180971 B
- JP H11131250 B
- JP H11152579 B
- JP 2000129455 A
- JP H1015484 B
- JP H1015485 B
- JP H1046350 B
- JP H10130857 B
- JP H9316655 B
- JP 2004322079 A
- JP 2000026979 A
- JP 2004107796 A